# EUROPÄISCHE PATENTSCHRIFT

(11) **EP 0 684 163 B1**
(45) Veröffentlichungstag und Bekanntmachung des Hinweises auf die Patenterteilung: **09.04.1997**
(21) Anmeldenummer: 95106684.4
(22) Anmeldetag: 04.05.1995
(51) Int. Cl.: B60R 21/00, H03K 17/082

(54) **Verfahren zur Aktivierung einer Endstufe für Sicherheitseinrichtungen eines Kraftfahrzeuges**
Method of activating the amplifier output stage of a safety device for vehicles
Procédé pour l'activation d'un étage amplificateur de sortie d'un dispositif de sécurité pour véhicule

(30) Priorität: 26.05.1994 DE 4418293
(43) Veröffentlichungstag der Anmeldung: 29.11.1995
(73) Patentinhaber: TEMIC TELEFUNKEN microelectronic GmbH, 74072 Heilbronn (DE)
(72) Erfinder: Fendt, Günther, D-86529 Schrobenhausen (DE); Hora, Peter, D-86529 Schrobenhausen (DE); Spies, Hans, D-85276 Pfaffenhofen (DE)
(74) Vertreter: Maute, Hans-Jürgen, Dipl.-Ing.

(56) Entgegenhaltungen:
- DE-A- 3 917 806
- DE-A- 4 210 861
- DE-A- 4 237 404
- US-A- 4 305 106

## Beschreibung

Die Erfindung betrifft ein Verfahren zur Aktivierung einer einen ersten und zweiten Leistungsschalter aufweisenden Endstufe einer Sicherheitseinrichtung für Fahrzeuginsassen mit wenigstens einem elektrisch betätigbaren Auslösemittel gemäß dem Oberbegriff des Patentanspruches 1 sowie eine Vorrichtung zur Durchführung des erfindungsgemäßen Verfahrens.

Kraftfahrzeuge enthalten zunehmend dem Schutz der Insassen dienende Sicherheitseinrichtungen, wie beispielsweise Airbag, Gurtstraffer oder Überrollsensoren. Dabei handelt es sich um sicherheitskritische Systeme, an die große Anforderungen bzgl. der Funktionssicherheit gestellt werden. Als Auslösemittel für diese Sicherheitseinrichtungen dienen beispielsweise Zündpillen für Gurtstraffer- und Airbag-Systeme als auch Relais zur Schaltung anderer Sicherheitssysteme. Solche Auslösemittel sind in der Regel in einem Laststromkreis, der zusätzlich High- und Low-Schalter und eventuell mechanische Sicherheitsschalter enthält, angeordnet, der von einer Endstufe gesteuert wird.

Liegen die Bedingungen für die Auslösung eines Sicherheitssystems vor, ist es wichtig, daß die Auslösemittel, wie beispielsweise die Zündpillen von Gasgeneratoren eines Airbags, zeitlich genügend lange, mit einem entsprechenden Sicherheitsfaktor angesteuert werden. Die Aktivierung einer Endstufe erzeugt einen Stromfluß in dem Laststromkreis, so daß Zündpillen durch den Stromfluß erhitzt werden und dadurch eine pyrotechnische Reaktion in Gang setzen. Die Zündpillen neigen jedoch während bzw. nach der Zündung zu Nebenschlüssen, wobei der zeitliche Sicherheitsfaktor zwecks sicherer Auslösung der Zündpillen im Fall eines Nebenschlusses mit ansteigendem Stromfluß eine Gefahr für die Endstufe darstellt, da diese im Fehlerfall auf einen Kurzschluß arbeitet und somit stark beansprucht wird. Im normalen Betriebsfall wird der Stromfluß durch den Laststromkreis, bedingt durch die Aktivierung der Zündpille unterbrochen und somit auf die Reaktionszeit der Zündpille begrenzt.

Der Erfindung liegt daher die Aufgabe zugrunde, ein Verfahren der eingangs genannten Art anzugeben, das eine sichere und störungsfreie Endstufenaktivierung gewährleistet und die Endstufe im Fehlerfalle, insbesondere bei einem Nebenschluß an einem sicherheitsrelevanten Auslösemittel, vor Zerstörung schützt.

Die Lösung dieser Aufgabe erfolgt durch die kennzeichnenden Merkmale des Patentanspruches 1, wonach eine Steuereinheit gleichzeitig ein erstes und zweites Steuersignal von jeweils bestimmter Zeitdauer derart erzeugt, daß die Zeitdauer des zweiten Steuersignales geringer ist als diejenige des ersten Steuersignales. Während der sich überschneidenden Zeitdauer dieser beiden Signale erfolgt im Crash-Fall, wenn in der Regel auch ein mechanischer Sicherheitsschalter geschlossen ist, das Schließen der beiden Leistungsschalter, so daß in dem Laststromkreis nunmehr ein Stromfluß entsteht. Mit Beginn des Stromflusses über die beiden Schalter erzeugen die beiden Stromdetektoren jeweils ein den Stromfluß anzeigendes Stromsignal. Dieses den Stromfluß über einen Schalter anzeigende Stromsignal bewirkt jeweils während der sich nicht überschneidenden Zeitdauer des ersten und zweiten Steuersignals die Aufrechterhaltung des Stromflusses über den jeweils anderen Schalter.

Mit diesem erfindungsgemäßen Verfahren wird einerseits ein sehr sicheres Auslöseverhalten des Auslösemittels, also beispielsweise einer Zündpille, erreicht, da die Differenz der Zeitdauern der beiden Steuersignale einen zeitlichen Sicherheitsfaktor darstellt. Andererseits wird im Fehlerfall während des Zündvorganges die Endstufenaktivierung unterbrochen, wodurch die Endstufe, insbesondere die Leistungsschalter, vor einer Zerstörung wegen Überbeanspruchung geschützt werden. Schließlich verhindert das erfindungsgemäße Verfahren im Fehlerfall, daß durch das zwangsweise Öffnen der beiden Leistungsschalter zuviel Energie aus dem die Zündenergie liefernden Speicherkondensator entnommen wird, was insbesondere dann wichtig ist, wenn zur Zündung von mehreren Auslösemitteln nur ein gemeinsamer Kondensator zur Verfügung steht.

Bei einer vorteilhaften Ausführungsform des erfindungsgemäßen Verfahrens erfolgt das Schließen des ersten Leistungsschalters mittels einer ersten logischen UND-Verknüpfung des ersten und zweiten Steuersignales als auch das Schließen des zweiten Schalters über eine zweite logische UND-Verknüpfung der beiden Steuersignale.

Nach Rücknahme des zweiten Steuersignales erfolgt die zwangsweise Aufrechterhaltung des Stromflusses über die beiden Leistungsschalter dadurch, daß das den Stromfluß über den ersten Schalter anzeigende Stromsignal mit dem ersten Steuersignal über die zweite logische UND-Verknüpfung verknüpft wird und daß das den Stromfluß über den zweiten Leistungsschalter anzeigende Stromsignal ebenfalls mit dem ersten Steuersignal über die erste logische UND-Verknüpfung verknüpft wird.

Schließlich wird gemäß Patentanspruch 4 eine Vorrichtung zur Durchführung des erfindungsgemäßen Verfahrens vorgeschlagen. Hiernach dient eine Steuereinheit, beispielsweise ein Mikroprozessor, zur Erzeugung des ersten und zweiten Steuersignals. Ferner ist jeweils eine einem Leistungsschalter zugeordnete Logikschaltung mit jeweils einem UND- und ODER-Gatter vorgesehen. Die Steuersignale werden diesen Logikschaltungen zugeführt und bewirken während der sich überschneidenden Zeitdauern der Steuersignale die aktive Ansteuerung der Leistungsschalter. Die Stromsignale des dem einen Leistungsschalter zugeordneten Stromdetektors werden jeweils der dem anderen Leistungsschalter zugeordneten Logikschaltung zugeführt. Dadurch wird so lange eine durch das Stromsignal bewirkte gegenseitige zwangsweise Ansteuerung der Leistungsschalter bewirkt, solange über beide Leistungsschalter ein Stromfluß detektiert wird, obwohl durch das zweite Steuersignal die aktive Ansteuerung der Leistungsschalter zurückgenommen wurde.

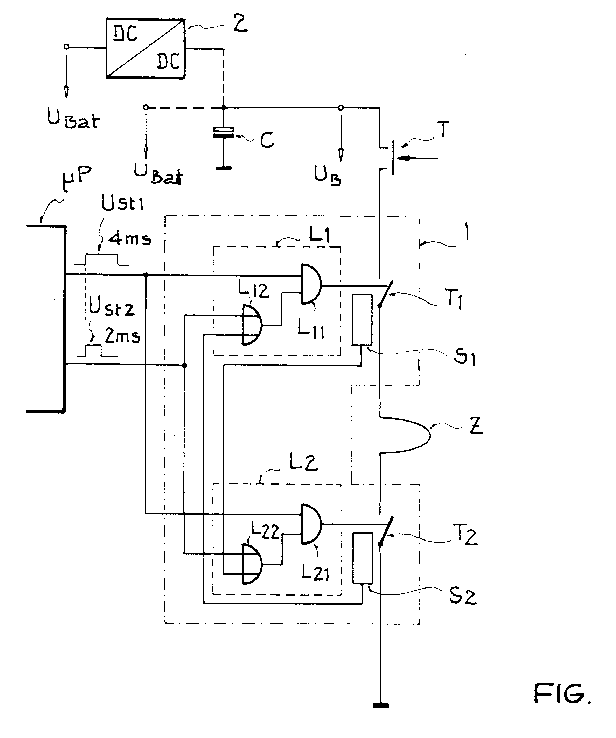

Im folgenden soll die Erfindung anhand eines Ausführungsbeispieles im Zusammenhang mit der Zeichnung dargestellt und erläutert werden.

Die Figur zeigt eine erfindungsgemäße Endstufe 1 mit einem ersten Leistungsschalter T1 und einem zweiten Leistungsschalter T2, die in einen Laststromkreis geschaltet sind. Dieser Laststromkreis besteht aus einer Reihenschaltung eines Speicherkondensators C, der das Betriebspotential U_{B} für den Laststromkreis erzeugt, einem mechanischen Sicherheitsschalter T, den schon genannten Leistungsschaltern T1 und T2 sowie einem Auslösemittel Z, das beispielsweise eine Zündpille darstellt, die bei Stromdurchfluß durch den Laststromkreis elektrisch erhitzt wird und dadurch eine pyrotechnische Reaktion in Gang setzt.

Der erste Leistungsschalter T1 verbindet das Auslösemittel Z über den mechanischen Sicherheitsschalter T mit dem Speicherkondensator C, während der zweite Leistungsschalter T2 das Auslösemittel Z mit dem Betriebspotential, also der Masse verbindet.

Jedem dieser beiden Leistungsschalter T1 und T2 ist ein Stromdetektor S1 und S2 zugeordnet, die in ihrer einfachsten Form als Stromshunt ausgebildet sein können.

Jeder der beiden Leistungsschalter T1 und T2 wird jeweils von einer Logikschaltung L1 und L2 angesteuert. Diese beiden Logikschaltungen L1 und L2 sind im Prinzip identisch aufgebaut und enthalten jeweils ein UND-Gatter L₁₁ bzw. L₂₁ sowie jeweils ein ODER-Gatter L₁₂ bzw. L₂₂, wobei die genannten Gatter jeweils zwei Eingänge aufweisen. Der Ausgang des UND-Gatters L₁₁ bzw. L₂₁ ist auf die Steuerelektrode des ersten Schalters T1 bzw. des zweiten Schalters T2 geführt. Einem der beiden Eingänge beider UND-Gatter L₁₁ und L₂₁ wird ein erstes Steuersignal Uₛₜ₁ angelegt, das von einer Steuereinheit, beispielsweise einem Mikroprozessor µP, erzeugt wird. Der zweite Eingang des UND-Gatters L₁₁ bzw. L₂₁ ist mit dem Ausgang des ODER-Gatters L₁₂ bzw. L₂₂ verbunden. Ein zweites, ebenfalls von dem Mikroprozessor µP erzeugtes zweites Steuersignal Uₛₜ₂ wird an einen Eingang beider ODER-Gatter L₁₂ und L₂₂ angelegt. Schließlich wird das von dem Stromdetektor S1 erzeugte Stromsignal, das den Stromfluß über den ersten Leistungsschalter T1 anzeigt, dem noch freien, zweiten Eingang des ODER-Gatters L₂₂ der zweite Logikschalter L2 zugeführt und in entsprechender Weise das Stromsignal des zweiten Stromdetektors S2 an den zweiten Eingang des ODER-Gatters L₁₂ der ersten logischen Schaltung L1 weitergeleitet.

Liegen die für eine Auslösung der Sicherheitseinrichtung mittels des Auslösemittels Z erforderlichen Kriterien vor, erzeugt der Mikroprozessor µP gleichzeitig das erste und zweite Steuersignal Uₛₜ₁ und Uₛₜ₂, die gemäß der Figur beispielsweise als Impulssignal mit einer Impulsdauer von 4 ms bzw. von 2 ms erzeugt werden und als Logiksignal jeweils einen H(High)-Pegel mit einer Dauer von 4 ms bzw. 2 ms darstellen. Die vom Mikroprozessor µP vorgegebene Ansteuerzeit für die beiden Leistungsschalter T1 und T2 beträgt somit 4 ms. Für die Aktivierung des Auslösemittels Z reicht in der Regel eine kürzere Zeitdauer als 4 ms aus. Im vorliegenden Fall einer Zündpille sind es 2 ms. Somit gibt man in der Ansteuerzeit einen zeitlichen Sicherheitsfaktor von 2 vor, um in jedem Fall eine Auslösung des Auslösemittels Z sicherzustellen. Liegen Auslösemittel mit anderen Auslösezeiten vor, sind auch entsprechend andere Impulsdauern der Steuersignale Uₛₜ₁ und Uₛₜ₂ zu wählen. Der mechanische Sicherheitsschalter T wird bei einem Aufprall des Fahrzeuges auf ein Hindernis durch die physikalische Beschleunigung geschlossen, so daß nunmehr ein Zündstrom über die beiden Leistungsschalter T1 und T2 sowie die Zündpille Z fließen kann, der von dem Speicherkondensator C zur Verfügung gestellt wird. Dieser wird von der Batteriespannung U_{Bat} einer Bordbatterie versorgt bzw. von einer von einem DC/DC-Wandler (Aufwärtswandler) 2 erzeugten höheren Spannung.

Bei einem Stromfluß über die beiden Leistungsschalter T1 und T2 wird jeweils ein Stromfluß durch die Stromdetektoren S1 und S2 detektiert, der als Stromsignal in Form eines logischen H-Pegels jeweils der den anderen Leistungsschalter ansteuernden Logikschaltung zugeführt wird. Dies hat zur Folge, daß im Auslösefall nach 2 ms die Ansteuerung der beiden Leistungsschalter T1 und T2 über die beiden ODER-Gatter L₁₂ und L₂₂ rückgängig gemacht wird, da das zweite Steuersignal Uₛₜ₂ nunmehr auf einen L(Low)-Pegel wechselt. Dennoch bleiben die beiden Leistungsschalter T1 und T2 so lange geschlossen, bis einer der beiden Stromdetektoren S1 oder S2 keinen Stromfluß mehr detektiert, da dann von einem Stromdetektor ein L-Pegel erzeugt wird, der auf den zweiten Eingang des entsprechenden UND-Gatters L₁₁ bzw. L₂₁ geführt wird und damit zum Öffnen des entsprechenden Leistungsschalters führt. Auf diese Weise wird erreicht, daß sich die beiden Leistungsschalter T1 und T2 zwangsweise während der durch das erste Steuersignal Uₛₜ₁ vorgegebenen 4 ms geschlossen halten, bis der Zündstrom durch die aktivierte Zündpille Z unterbrochen wird.

Nun neigen derartige Zündpillen nach oder während der Zündung zu Nebenschlüssen, die zu einem ansteigenden Stromfluß durch einen der beiden Leistungsschalter führt und damit eine Gefahr für die Endstufe darstellt. Denn in einem solchen Fehlerfall arbeitet die Endstufe auf einem Kurzschluß, wodurch sie sehr stark beansprucht wird, was sogar zu einer Zerstörung der Endstufe führen kann.

Entsteht nun nach einer Aktivierung der Zündpille Z ein solcher Nebenschluß, so kann einer der beiden Stromdetektoren S1 oder S2 keinen Strom mehr detektieren mit der Folge einer Unterbrechung der Ansteuerung des stromführenden Leistungsschalters. Somit wird bei einem während des Zündvorganges auftretenden Fehlerfall die Endstufenaktivierung unterbrochen und ein zuverlässiger Schutz der Endstufe bzw. deren Bond-Drähte vor Zerstörung erreicht.

Gleichzeitig wird in einem solchen Fehlerfall verhindert, daß zuviel Energie aus dem Speicherkondensator C entnommen wird. Dies ist vor allem dann wichtig bzw. sogar zwingend erforderlich, wenn zur Zündung von mehreren Endstufen nur ein gemeinsamer Kondensator zur Verfügung steht. Somit ist es beim Einsatz der erfindungsgemäßen Schaltung möglich, lediglich einen Kondensator für die Bereitstellung der Zündenergie sowie für die Autarkieenergie zu verwenden.

Die Anwendung der Erfindung ist nicht nur auf die Ansteuerung einer Zündpille als Auslösemittel beschränkt, wie es in der Figur dargestellt ist, sondern ist auch für den Einsatz anderer Sicherheitssysteme geeignet. So kann beispielsweise das Auslösemittel ein Relais oder auch eine Magnetwicklung für Einspritzventile darstellen.

## Patentansprüche

1. Verfahren zur Aktivierung einer einen ersten und zweiten Leistungsschalter (T1, T2) aufweisende Endstufe (1) einer Sicherheitseinrichtung für Fahrzeuginsassen mit wenigstens einem elektrisch betätigbaren Auslösemittel (Z), wobei der erste Leistungsschalter (T1) das Auslösemittel (Z) mit einem Betriebspotential (U_{B}) und der zweite Leistungsschalter (T2) das Auslösemittel (Z) mit einem Bezugspotential (Masse) verbindet und jedem Leistungsschalter (T1, T2) ein Stromdetektor (S1, S2) zugeordnet ist, gekennzeichnet durch folgende Merkmale:
a) es werden gleichzeitig ein erstes und zweites Steuersignal (Uₛₜ₁, Uₛₜ₂) von jeweils bestimmter Zeitdauer erzeugt, wobei das zweite Steuersignal (Uₛₜ₂) eine kürzere Zeitdauer als das erste Steuersignal (Uₛₜ₁) aufweist,
b) das erste und zweite Steuersignal (Uₛₜ₁, Uₛₜ₂) bewirken während der sich überschneidenden Zeitdauer dieser Signale das Schließen des ersten und zweiten Leistungsschalters (T1, T2),
c) mit Beginn des Stromflusses über den ersten und zweiten Leistungsschalter (T1, T2) erzeugen die beiden Stromdetektoren (S1, S2) jeweils ein den Stromfluß anzeigendes Stromsignal und
d) das den Stromfluß über den einen Leistungsschalter (T1, T2) anzeigende Stromsignal bewirkt jeweils während der sich nicht überschneidenden Zeitdauer des ersten und zweiten Steuersignals (Uₛₜ₁, Uₛₜ₂) die Aufrechterhaltung des Stromflusses über den anderen Schalter (T2, T1).

2. Verfahren nach Anspruch 1, dadurch gekennzeichnet, daß das erste und zweite Steuersignal (Uₛₜ₁, Uₛₜ₂) über eine erste logische UND-Verknüpfung (L1) das Schließen des ersten Schalters (T1) und über eine zweite logische UND-Verknüpfung (L2) das Schließen des zweiten Leistungsschalters (T2) bewirkt.

3. Verfahren nach Anspruch 2, dadurch gekennzeichnet, daß das den Stromfluß über den ersten Leistungsschalter (T1) anzeigende Stromsignal und das erste Steuersignal (Uₛₜ₁) über die zweite logische UND-Verknüpfung (L2) die Aufrechterhaltung des Stromflusses über den zweiten Leistungsschalter (T2) bewirkt und daß das den Stromfluß über den zweiten Leistungsschalter (T2) anzeigende Stromsignal und das erste Steuersignal (Uₛₜ₁) über die erste logische UND-Verknüpfung (L1) die Aufrechterhaltung des Stromflusses über den ersten Leistungsschalter (T1) bewirkt.

4. Vorrichtung zur Durchführung des Verfahrens nach einem der vorangehenden Ansprüche, gekennzeichnet durch folgende Merkmale:
a) es ist eine Steuereinheit (µP) zur Erzeugung des ersten und zweiten Steuersignals (Uₛₜ₁, Uₛₜ₂) vorgesehen,
b) des weiteren sind eine erste und zweite Logikschaltung (L1, L2) zur Ansteuerung des ersten bzw. zweiten Leistungsschalter (T1, T2) vorgesehen,
c) die erste und zweite Logikschaltung (L1, L2) umfassen jeweils ein UND- und ODER-Gatter (L₁₁, L₁₂; L₂₁, L₂₂) mit jeweils einem ersten und zweiten Eingang,
d) die Ausgänge der beiden UND-Gatter (L₁₁, L₂₁) stellen jeweils den Ausgang der ersten bzw. der zweiten Logikschaltung (L1, L2) dar,
e) den ersten Eingängen der UND-Gatter (L₁₁, L₂₁) werden das erste Steuersignal (Uₛₜ₁) zugeführt,
f) den ersten Eingängen der ODER-Gatter (L₁₂, L₂₂) werden das zweite Steuersignal (Uₛₜ₂) zugeführt,
g) die Ausgänge der ODER-Gatter (L₁₂, L₂₂) werden jeweils auf den zweiten Eingang der UND-Gatter (L₁₁, L₂₁) der zugehörigen Logikschaltung (L1, L2) geführt,
h) das Ausgangssignal des dem ersten Leistungsschalter (T1) zugeordneten Stromdetektors (S1) wird dem zweiten Eingang des ODER-Gatters (L₂₂) der zweiten Logikschaltung (L2) zugeführt und
i) entsprechend wird das Ausgangssignal des dem zweiten Leistungsschalter (T2) zugeordneten Stromdetektors (S2) dem zweiten Eingang des ODER-Gatters (L₁₂) der ersten Logikschaltung (L1) zugeführt.

5. Vorrichtung nach Anspruch 4, dadurch gekennzeichnet, daß zur Erzeugung des Betriebspotentials (U_{B}) ein Speicherkondensator (C) vorgesehen ist.

## Claims

1. A process for activating an end stage (1), comprising a first and second power switch (T1, T2), of a safety device for vehicle occupants with at least one electrically operable triggering means (Z), where the first power switch (T1) connects the triggering means (Z) to an operating potential (U_{B}) and the second power switch (T2) connects the triggering means (Z) to a reference potential (earth) and each power switch (T1, T2) is assigned a current detector (S1, S2), characterised by the following features:
a) a first and second control signal (Uₛₜ₁, Uₛₜ₂) in each case of a specified duration are generated simultaneously, where the second control signal (Uₛₜ₂) is of a shorter duration than the first control signal (Uₛₜ₁),
b) during the overlapping duration of these signals the first and second control signal (Uₛₜ₁, Uₛₜ₂) effect the closure of the first and second power switch (T1, T2),
c) upon the commencement of the current flow across the first and second power switch (T1, T2) the two current detectors (S1, S2) in each case generate a current signal indicating the current flow and
d) during the non-overlapping duration of the first and second control signal (Uₛₜ₁, Uₛₜ₂) the current signal indicating the current flow across the one power switch (T1, T2) in each case maintains the current flow across the other switch (T2, T1).

2. A process according to Claim 1, characterised in that the first and second control signal (Uₛₜ₁, Uₛₜ₂) effect the closure of the first switch (T1) via a first logic AND operation (L1) and the closure of the second power switch (T2) via a second logic AND operation (L2).

3. A process according to Claim 2, characterised in that via the second logic AND operation (L2) the current signal, which indicates the current flow across the first power switch (T1), and the first control signal (Uₛₜ₁) maintain the current flow across the second power switch (T2), and that via the first logic AND operation (L1) the current signal, which indicates the current flow across the second power switch (T2), and the first control signal (Uₛₜ₁) maintain the current flow across the first power switch (T1).

4. A device for the implementation of the process according to one of the preceding claims, characterised by the following features:
a) a control unit (µP) is provided for the generation of the first and second control signal (Uₛₜ₁, Uₛₜ₂),
b) additionally, a first and second logic circuit (L1, L2) are provided for driving the first and second power switch (T1, T2) respectively,
c) the first and second logic circuit (L1, L2) in each case comprise an AND gate and an OR gate (L₁₁, L₁₂; L₂₁, L₂₂) in each case with a first and second input,
d) the outputs of the two AND gates (L₁₁, L₂₁) in each case represent the output of the first and second logic circuit (L1, L2) respectively,
e) the first inputs of the AND gates (L₁₁, L₂₁) are supplied with the first control signal (Uₛₜ₁),
f) the first inputs of the OR gates (L₁₂, L₂₂) are supplied with the second control signal (Uₛₜ₂),
g) the outputs of the OR gates (L₁₂, L₂₂) in each case lead to the second input of the AND gates (L₁₁, L₂₁) of the associated logic circuit (L1, L2),
h) the output signal of the current detector (S1) assigned to the first power switch (T1) is fed to the second input of the OR gate (L₂₂) of the second logic circuit (L2) and
i) correspondingly the output signal of the current detector (S2) assigned to the second power switch (T2) is fed to the second input of the OR gate (L₁₂) of the first logic circuit (L1).

5. A device according to Claim 4, characterised in that a storage capacitor (C) is provided for generating the operating potential (U_{B}).

## Revendications

1. Procédé pour l'activation d'un étage de sortie (1), présentant un premier et un second interrupteurs de puissance (T1, T2), d'un dispositif de sécurité pour occupants d'un véhicule, comportant au moins un moyen de déclenchement (Z) manoeuvrable électriquement, le premier interrupteur de puissance (T1) reliant le moyen de déclenchement (Z) à un potentiel de service (U_{B}) et le second interrupteur de puissance (T2) reliant le moyen de déclenchement (Z) à un potentiel de référence (masse) et un détecteur de courant (S1, S2) étant associé à chaque interrupteur de puissance (T1, T2), caractérisé par les caractéristiques suivantes:
a) sont simultanément produits un premier et un second signaux de commande (Uₛₜ₁, Uₛₜ₂) pendant, chacun un intervalle de temps déterminé, le second signal de commande (Uₛₜ₂) présentant un intervalle de temps plus bref que le premier signal de commande (Uₛₜ₁),
b) pendant l'intervalle de temps où ces signaux se chevauchent, le premier et le second signaux de commande (Uₛₜ₁, Uₛₜ₂) opèrent la fermeture du premier et du second interrupteurs de puissance (T1, T2),
c) au début du passage du courant par le premier et le second interrupteurs de puissance (T1, T2), les deux détecteurs de courant (S1, S2) produisent chacun un signal de courant indiquant le passage du courant et
d) pendant l'intervalle de temps où le premier et le second signaux de commande (Uₛₜ₁, Uₛₜ₂) ne se chevauchent pas, le signal de courant, indiquant le passage du courant par l'un des interrupteurs de puissance (T1, T2), opère le maintien du passage de courant par l'autre interrupteur (T2, T1).

2. Procédé selon la revendication 1, caractérisé par le fait que le premier et le second signaux de commande (Uₛₜ₁, Uₛₜ₂) opèrent, par l'intermédiaire d'une première liaison logique ET (L1), la fermeture du premier interrupteur (T1) et, par l'intermédiaire d'une seconde liaison logique ET (L2), la fermeture du second interrupteur de puissance (T2).

3. Procédé selon la revendication 2, caractérisé par le fait que le signal de courant indiquant le passage de courant par le premier interrupteur de puissance (T1) et le premier signal de commande (Uₛₜ₁) opèrent, par l'intermédiaire de la seconde liaison logique ET (L2) le maintien du passage du courant par le second interrupteur de puissance (T2) et que le signal de courant indiquant le passage de courant par le second interrupteur de puissance (T2) et le premier signal de commande (Uₛₜ₁) opèrent, par l'intermédiaire de la première liaison logique ET (L1) le maintien du passage du courant par le premier interrupteur de puissance (T1).

4. Dispositif pour la mise en oeuvre du procédé selon l'une des revendications précédentes caractérisé par les caractéristiques suivantes:
a) est prévue une unité de commande (µP) pour la production du premier et du second signaux de commande (Uₛₜ₁, Uₛₜ₂).
b) sont en outre prévus un premier et un second circuits logiques (T1, T2) pour l'excitation du premier ou du second interrupteur de puissance (T1, T2).
c) le premier et le second circuits logiques (L1, L2) comportent chacun une porte ET et une porte OU (L₁₁, L₁₂, L₂₁, L₂₂) avec chacune une seconde entrée.
d) les sorties des deux portes ET (L₁₁, L₂₁) représentent chacune la sortie du premier ou du second circuit logique (L1, L2),
e) le premier signal de commande (Uₛₜ₁) est amené aux premières entrées des portes ET (L₁₁, L₂₁),
F) le second signal de commande (Uₛₜ₂) est amené aux premières entrées des portes OU (L₁₂, L₂₂),
g) les signaux de sortie des portes OU (L₁₂, L₂₂) sont chacun amenés à la seconde entrée de la porte ET (L₁₁, L₂₁) du circuit logique correspondant (L1, L2),
h) le signal de sortie du détecteur de courant (S1) associé au premier interrupteur de puissance (T1) est amené à la seconde entrée de la porte OU (L₂₂) du second circuit logique (L2), et
i) de façon correspondante, le signal de sortie du détecteur de courant (S2) associé au second interrupteur de puissance (T2) est amené à la seconde entrée de la porte OU (L₁₂) du premier circuit logique (L1).

5. Dispositif selon la revendication 4, caractérisé par le fait que pour la production du potentiel de service (U_{B}) est prévu un condensateur à accumulation (C).
